# EUROPÄISCHE PATENTANMELDUNG

(11) **EP 1 118 535 A2**
(43) Veröffentlichungstag der Anmeldung: **25.07.2001**
(21) Anmeldenummer: 01100429.8
(22) Anmeldetag: 08.01.2001
(51) Int. Cl.: B63B 35/79

(54) **Verbundkörper, insbesondere Segel- bzw. Wellenreitbrett**

(30) Priorität: 19.01.2000 DE 10002185
(71) Anmelder: Boards & More Ges.m.b.H., 4591 Molln (AT)
(72) Erfinder: Scharl, Thomas, 4563 Micheldorf (DE)
(74) Vertreter: von Bülow, Tam, Dr.

(57) **Zusammenfassung**

Der Verbundkörper aus einem Schaumstoffkern (1), einer Tragschicht (2, 3) und einer Abdeckschicht (10, 11) hat zumindest in Teilbereichen (5) der Oberfläche der Tragschicht (2) eine Mehrzahl von Einschnitten (6) bzw. Einkerbungen. Durch die Einschnitte (6) bzw. Einkerbungen erhöht sich das Biegevermögen der Tragschicht (2), so daß sie auch in stärker gekrümmten Bereichen des Schaumstoffkerns, insbesondere im Randbereich (5), an dessen Kontur angepaßt werden kann.

## Beschreibung

Die vorliegende Erfindung betrifft einen Verbundkörper, insbesondere ein Segel- bzw. Wellenreitbrett gemäß dem Oberbegriff des Patentanspruches 1.

Aus der EP 0 064 937 A2 ist ein Surfbrett bekannt, das in sog. "Zweischalenbauweise" hergestellt ist. Hierbei wird zunächst auf einen aus expandierendem Polystyrol (EPS-Kern) bestehenden Kern ein Fadengewirk aufgebracht. Anschließend wird eine schäumende Klebemasse flächig auf den Kern aufgetragen. Der Kern wird dann zwischen zwei vorgeformte Schalenteile eingelegt, die an ihrer Stoßfuge entweder miteinander verklebt oder unter Wärmezufuhr und Druck in einer Herstellform miteinander verschweißt werden.

Aus der EP 0 069 076 ist ein Verfahren zur Herstellung eines Verbundkörpers mit einem Kunststoff-Hartschaumkern und einer Tragschicht bekannt. Die Herstellung des Verbundkörpers erfolgt mit einer zweiteiligen Gießform, wobei in einem ersten Schritt die beiden Gießformteile mit einer Folie ausgekleidet werden, die später die Oberfläche des Verbundkörpers bildet. Nach Einfüllen einer dickflüssigen Masse, welche die Tragschicht des Verbundkörpers bildet, wird der Hartschaumkern eingelegt und die Form wird geschlossen. Dann erfolgt die Schäumung und Aushärtung der Tragschicht und anschließend wird der fertige Verbundkörper entformt.

Herkömmliche, in Serienfertigung hergestellte Surfbretter weisen häufig einen sog. "Sandwichaufbau" auf, bei dem auf die Unterseite und die Oberseite eines Schaumstoffkerns aus expandiertem Polystyrol Hartschaumplatten aus Kunststoff (z.B. geschäumtes PVC) aufgeklebt werden, die deutlich fester als der Schaumstoffkern sind und als "Tragschicht" dienen. Diese Hartschaumplatten sind aber nur in begrenztem Maße verformbar. Im Randbereich des Schaumstoffkerns, der wesentlich stärker gekrümmt ist als die Ober- bzw. Unterseite, werden daher die Hartschaumplatten abgeschnitten, da ihre Elastizität für die hier erforderliche Verformung nicht ausreicht. Eine solch starke Verformung wäre zwar durch thermische Energiezufuhr möglich, was aber sehr aufwendig und teuer ist. Zur Verstärkung des Randbereiches wird daher der Zwischenraum zwischen dem Schaumstoff kern, einer Abdeckfolie und den Stoßkanten der oberen und unteren Hartschaumplatte in der Dicke der Hartschaumplatten mit Glasfasergewebe und Harz laminiert oder mit Kunststoff - wie z.B. Epoxidharz - ausgefüllt, der "Surfbrett-Rohling" mit einer wasserdichten Oberflächenhaut (z.B. aus ASA; Acrylkautschuk-Styrol-Acrylnitril-Copolymer) beschichtet. Die relativ dicke Laminierung oder Kunststoffüllung im Randbereich des Surfbretts erhöht jedoch das Gewicht und stellt technisch eine Schwachstelle dar.

Aufgabe der vorliegenden Erfindung ist es, einen Verbundkörper, insbesondere ein Surfbrett bzw. ein Wellenreitbrett, zu schaffen, das bei einfacher Herstellung sich durch ein geringes Gewicht bei hoher Festigkeit auszeichnet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, die auf einen Schaumstoffkern aufzubringende Tragschicht zumindest in Teilbereichen ihrer Oberfläche mit einer Mehrzahl von Einschnitten bzw. Einkerbungen zu versehen. Durch die Einschnitte bzw. Einkerbungen erhöht sich das Biegevermögen der Tragschicht, so daß sie auch in stärker gekrümmten Bereichen des Verbundkörpers, insbesondere im Randbereich, an die Kontur des Schaumstoffkerns angepaßt werden kann. Dies ermöglicht einen rundum geschlossenen Sandwichaufbau bei geringem Gewicht. Durch den geschlossenen Aufbau erhöht sich ferner die Steifigkeit, die Bruchfestigkeit und die Lebensdauer des Verbundkörpers.

Vorzugsweise sind die Einschnitte bzw. Einkerbungen an der Außenseite, d.h. an der dem Schaumstoffkern abgewandten Seite, der Tragschicht vorgesehen, so daß sich die Einschnitte beim Biegen der Tragschicht fächer- bzw. kerbenförmig öffnen.

Als Tragschicht kann beispielsweise eine Hartschaumplatte verwendet werden, die durch das Einschneiden bzw. Einkerben leicht entsprechend der Kontur des Schaumstoffkerns verformt werden kann. Für die Oberseite und die Unterseite wird jeweils eine separate Hartschaumplatte als Tragschicht verwendet werden, die im Randbereich des Surfbretts Stoß auf Stoß miteinander verklebt werden. Zur Herstellung eines nahtlosen Übergangs kann der Stoßbereich mit überlappendem Gewebe, z.B. einem Glasfasergewebe, überlaminiert werden.

Auf die Oberfläche des so erhaltenen Rohlings wird z.B. durch Besprühen schäumendes Harz aufgebracht. In bekannter Weise wird eine vorbereitete zweiteilige Herstellform, in deren Formhälften die Oberflächenhaut (sog. ASA-Schicht) eingebracht ist, der noch "nasse" Rohling eingelegt und anschließend in einem einzigen Arbeitsgang zu einem fertigen Surfbrett gepreßt.

Im folgenden wird die Erfindung anhand eines Ausführungsbeispieles im Zusammenhang mit der Zeichnung näher erläutert. Es zeigen:
- Fig. 1: einen Querschnitt durch den Rumpf eines Surfbretts gemäß der Erfindung und
- Fig. 2: eine Draufsicht auf einen Rohling des Surfbrettrumpfes gemäß der Erfindung.

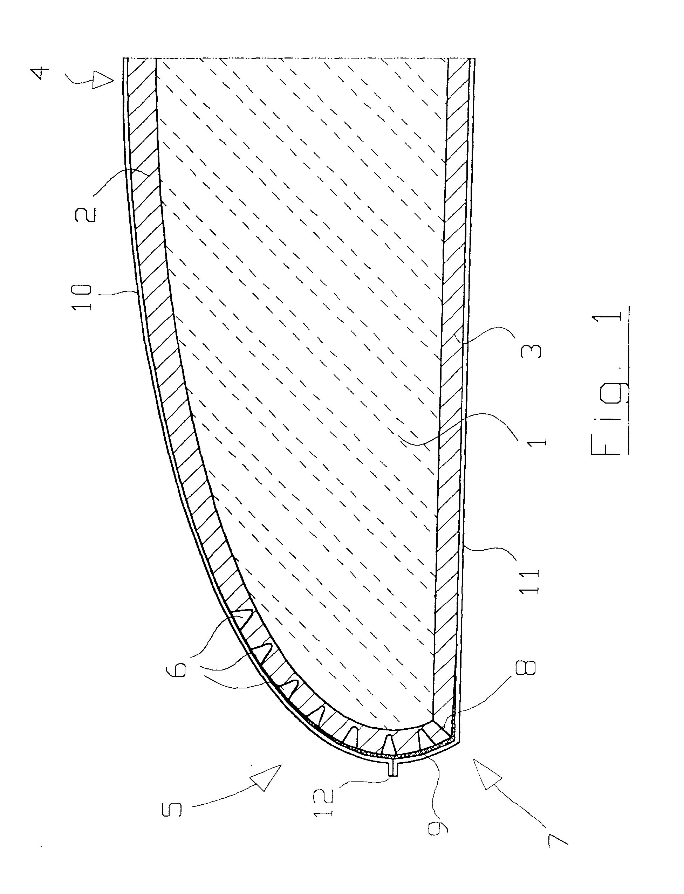

Fig. 1 zeigt einen Querschnitt durch eine Rumpfhälfte eines Surfbretts. Das Surfbrett weist einen Schaumstoff kern 1 auf, der z.B. aus expandiertem Polystyrol (EPS) besteht. Auf den Schaumstoffkern 1 ist eine Tragschicht aufgeklebt, die aus einer oberen Tragschichthälfte 2 und einer unteren Tragschichthälfte 3 besteht. Die Tragschichthälften 2, 3 können beispielsweise aus Hartschaumplatten hergestellt werden.

Es ist deutlich zu erkennen, daß die Krümmung des Surfbretts vom Mittelbereich 4 zum Randbereich 5 hin zunimmt. Die Hartschaumplatte, welche hier die obere Tragschicht 2 bildet, wird daher vor dem Aufkleben bzw. Verformen im Randbereich 5 mit einer Mehrzahl von Einschnitten 6 versehen, wodurch sich das Biegevermögen der oberen Tragschicht 2 erhöht. Die Tragschicht 2 wird dann so aufgeklebt, daß die Einschitte 6 an der Außenseite, d.h. an der dem Schaumstoffkern 1 abgewandten Seite, liegen. Durch das Verformen der Tragschicht 2 beim Aufkleben auf den Schaumstoffkern 1 werden die Einschnitte 6 aufgebogen, so daß sich die in Fig. 1 dargestellten kerbenartigen Ausnehmungen ergeben.

Die obere Tragschicht 2 ist bis zu einer "Unterkante" 7 des Surfbrettrumpfes nach unten geführt und dort an einer Stoßstelle 8 mit der unteren Tragschicht 3 verklebt. Die Stoßstelle 8 ist optional mit einer harzgetränkten Glasfaserschicht 9 überlaminiert, die bis in den Randbereich 5 nach oben und bis zur Unterseite des Surfbretts reicht, also die Stoßstelle 8 und einige oder alle Kerben 6 überdeckt. Die kerbenartigen Einschnitte 6 können zuvor mit Harz aufgefüllt werden.

Auf den so erhaltenen Surfbrettrohling wird schäumendes oder nicht schäumendes Harz, wie z.B. Epoxi oder Polyurethan, aufgebracht, z.B. durch Besprühen. In bekannter Weise wird dann eine wasserdichte Oberflächenschicht (ASA-Schicht) aufgebracht, die hier aus einer oberen Oberflächenschicht 10 und einer unteren Oberflächenschicht 11 gebildet ist und die im Randbereich 5 des Surfbretts an einer Stoßstelle 12 wasserdicht miteinander verklebt oder verschweißt sind. Dieser Fertigungsschritt erfolgt mit einer zweiteiligen Form (nicht dargestellt), wobei die obere und die untere Oberflächenschicht 9 bzw. 10 in zugeordnete Formhälften eingebracht sind. Anschließend wird der Rohling in die Form eingelegt und die Formhälften werden geschlossen. Bei einer vorgegebenen Temperatur wird das Surfbrett "gebacken", wobei der Kleber bzw. das Harz zwischen dem Schaumstoffkern 1 und der Tragschicht 2, 3 bzw. zwischen der Tragschicht 2, 3 und der Oberflächenschicht 10, 11 aushärtet.

Hierdurch ergibt sich ein rundum geschlossener, homogener sandwichartiger Aufbau in sog. Monocoque-Bauweise, der im Vergleich zu dem eingangs erwähnten herkömmlichen Aufbau ein geringeres Gewicht, eine höhere Steifigkeit, eine höhere Bruchfestigkeit und eine längere Lebensdauer hat.

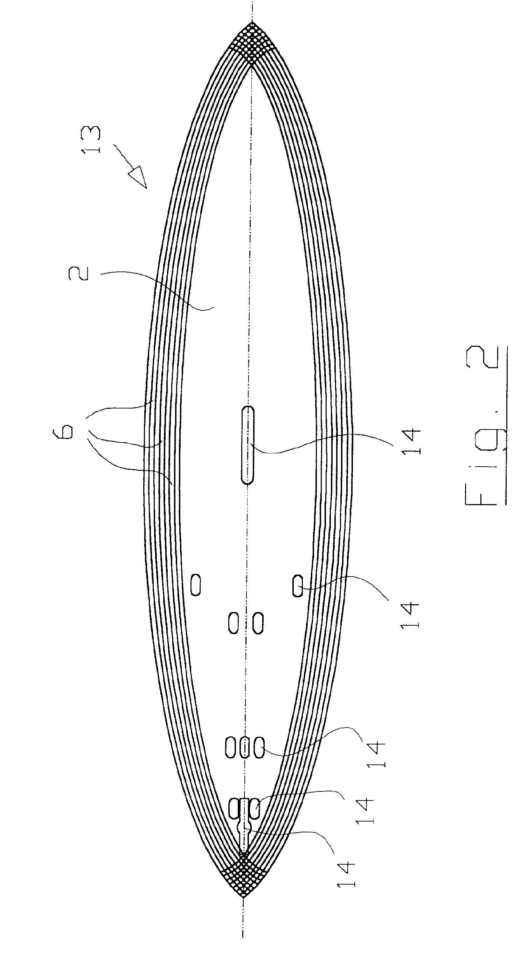

Fig. 2 zeigt eine Draufsicht auf die obere Hartschaumplatte 2 eines Surfbrettrumpfes. Im Randbereich des Surfbrettrumpfes sind die Einschnitte 6 zu erkennen, die sich im Spitzen- und Endbereich kreuzen, so daß die Hartschaumplatte dort besonders flexibel ist und sich auch der in Längsrichtung des Surfbrettrumpfes dort vorhandenen stärkeren Krümmung anpaßt. Ferner sind mehrere Ausnehmungen 14 für die Finne, das Schwert und Fußschlaufen sowie sonstige Einbauteile vorgesehen.

## Patentansprüche

1. Verbundkörper, insbesondere Segel- bzw. Wellenreitbrett mit einem Schaumstoff kern, auf den eine Tragschicht aus Kunststoff aufgebracht ist, wobei auf die Tragschicht eine Oberflächenschicht aufgebracht ist, dadurch gekennzeichnet,
daß die Tragschicht (2, 3) zumindest in Teilbereichen (5) ihrer Oberfläche eine Mehrzahl von Einschnitten (6) bzw. Einkerbungen aufweist.

2. Verbundkörper nach Anspruch 1, dadurch gekennzeichnet,
daß die Einschnitte (6) bzw. Einkerbungen auf der dem Schaumstoff kern (1) abgewandten Seite der Tragschicht (2, 3) vorgesehen sind.

3. Verbundkörper nach einem der Ansprüche 1 oder 2, dadurch gekennzeichnet,
daß die Einschnitte (6) bzw. Einkerbungen in einem Randbereich (5) des Verbundkörpers vorgesehen sind.

4. Verbundkörper nach einem der Ansprüche 1 bis 3, wobei der Verbundkörper vollständig von der Tragschicht umschlossen ist, dadurch gekennzeichnet,
daß die Tragschicht durch eine obere Tragschicht (2) und eine untere Tragschicht (3) gebildet ist, die an einer Stoßkante (8) miteinander verklebt sind.

5. Verbundkörper nach Anspruch 4, dadurch gekennzeichnet, daß die Stoßkante (8) mit einem harzgetränkten Gewebe überlaminiert ist.

6. Verbundkörper nach einem der Ansprüche 1 bis 5, dadurch gekennzeichnet,
daß die Einschnitte (6) bzw. Einkerbungen mit einem harzgetränkten Gewebe überlaminiert sind.
